# NEUE EUROPÄISCHE PATENTSCHRIFT

(11) **EP 1 149 451 B2**
(45) Veröffentlichungstag und Bekanntmachung des Hinweises auf die Entscheidung über den Einspruch: **09.07.2008**
(45) Hinweis auf die Patenterteilung: 29.09.2004
(21) Anmeldenummer: 00908933.5
(22) Anmeldetag: 17.01.2000
(51) Int. Cl.: H02H 7/085

(54) **VERFAHREN UND STEUERUNG ZUM STEUERN EINER ANTRIEBSVORRICHTUNG FÜR EINE ABSCHLUSSEINRICHTUNG EINES GEBÄUDES ODER EINER EINFRIEDUNG**
METHOD AND CONTROL MECHANISM FOR CONTROLLING A DRIVE DEVICE FOR A CLOSING DEVICE OF A BUILDING OR AN ENCLOSED AREA
PROCEDE ET COMMANDE POUR COMMANDER UN DISPOSITIF D'ENTRAINEMENT DESTINE A UNE INSTALLATION DE FERMETURE D'UN BATIMENT OU D'UNE ENCEINTE

(30) Priorität: 18.01.1999 DE 19901781; 03.12.1999 DE 19958308
(43) Veröffentlichungstag der Anmeldung: 31.10.2001
(73) Patentinhaber: Hörmann KG Antriebstechnik, 33790 Halle i. Westfalen (DE)
(72) Erfinder: HÖRMANN, Thomas J., D-66606 St. Wendel (DE)
(74) Vertreter: Kastel, Stefan
(86) Internationale Anmeldenummer: PCT/DE2000/000143
(87) Internationale Veröffentlichungsnummer: WO 2000/042687

(56) Entgegenhaltungen:
- EP-B- 0 771 923
- DE-A- 3 532 078
- DE-A- 4 000 730
- DE-A- 19 628 238
- "Ueberwachung und Fehlerdiagnose" - VDI Verlag

## Beschreibung

Die Erfindung betrifft ein Verfahren zum Steuern einer an ein Tor, eine Tür, ein Fenster oder eine sonstige zwischen einer Öffnungs- und Schließstellung bewegliche Abschlusseinrichtung eines Gebäudes oder einer Einfriedung zum Antreiben derselben angeschlossenen Antriebsvorrichtung, beinhaltend
- Festlegen eines Schwellwerts für wenigstens einen von der zum Öffnen oder Schließen der Abschlusseinrichtung benötigten Antriebskraft abhängigen, insbesondere zu dieser Antriebskraft zumindest bereichsweise direkt oder umgekehrt proportionalen, Betriebsparameters der Antriebsvorrichtung, wie vorzugsweise der Leistungsaufnahme des Motorstromes, der Motordrehzahl und/oder der Motorversorgungsspannung eines Antriebsmotors der Antriebsvorrichtung, während einer Lernfahrt in der Art, dass ein Übersteigen des Betriebsparameters über den festgelegten Schwellwert hinaus oder ein Absinken des Betriebsparameters unter den festgelegten Schwellwert ein unzulässiges Ansteigen der Antriebskraft anzeigt,
- Überwachen des wenigstens einen Betriebsparameters während des Betriebs der Antriebsvorrichtung, und
- Abschalten oder Reversieren der Antriebsvorrichtung, wenn durch das Übersteigen bzw. das Absinken des Betriebsparameters oder eines von mehreren Betriebsparametern über bzw. unter den jeweils festgelegten Schwellwert ein unzulässiges Ansteigen der Antriebskraft festgestellt wird. Außerdem betrifft das Verfahren eine Steuerung, insbesondere zur Durchführung dieses Verfahrens, einer an ein Tor, eine Tür, ein Fenster oder eine sonstige zwischen einer Öffnungs- und Schließstellung bewegliche Abschlusseinrichtung eines Gebäudes oder einer Einfriedung zum Antreiben derselben angeschlossenen Antriebsvorrichtung, mit
- einer Schwellwertbestimmungseinrichtung zum Festlegen eines Schwellwerts für wenigstens einen von der zum Öffnen oder Schließen der Abschlusseinrichtung benötigten Antriebskraft abhängigen, insbesondere zu dieser Antriebskraft zumindest bereichsweise direkt oder umgekehrt proportionalen, Betriebsparameters der Antriebsvorrichtung, wie vorzugsweise des Motorstromes, der Motordrehzahl und/oder der Motorversorgungsspannung eines Antriebsmotors der Antriebsvorrichtung, während einer Lemfahrt in der Art, dass ein Übersteigen des Betriebsparameters über den festgelegten Schwellwert hinaus oder ein Absinken des Betriebsparameters unter den festgelegten Schwellwert ein unzulässiges Ansteigen der Antriebskraft anzeigt,
- einer Überwachungseinrichtung zum Überwachen des wenigstens einen Betriebsparameters während des Betriebs der Antriebsvorrichtung, und
- einer Notabschalteinrichtung zum Abschalten oder Reversieren der Antriebsvorrichtung, wenn durch das Übersteigen bzw. das Absinken des Betriebsparameters oder eines von mehreren Betriebsparametern über bzw. unter den jeweils festgelegten Schwellwert ein unzulässiges Ansteigen der Antriebskraft festgestellt wird.

Ein solches Verfahren und eine solche Steuerung sind aus der DE 196 28 238 C2 bekannt, auf die für weitere Einzelheiten solcher Verfahren und Steuerungen ausdrücklich verwiesen wird.

Zum Bewegen eines Tores/Fensters bzw. einer Tür oder sonstigen zwischen einer Öffnungs- und Schließstellung beweglichen Abschlusseinrichtung für Gebäude oder Einfriedungen müssen Kräfte aufgewendet werden, deren jeweilige Höhen typischerweise von dem Gewicht und der Mechanik des betreffenden Tores, Fensters, der betreffenden Tür oder der sonstigen Abschlusseinrichtung und von der jeweiligen Position dieser Tür/Fenster/Tor oder dergleichen Abschlusseinrichtung abhängig sind.

Wird diese Abschlusseinrichtung durch eine Antriebsvorrichtung - beispielsweise eines Garagentorantriebes bei einem als Garagentor ausgebildeten Abschluss - bewegt, so kann der jeweilige Kraftbedarf in vom Antrieb abgeleiteten Größen oder Betriebsparametern, wie z. B. der Leistungs- oder Stromaufnahme des Antriebsmotors, Verlangsamung der Fahrtgeschwindigkeit an Stellen, wo besonders große Kräfte erforderlich sind, Absinken der Motorversorgungsspannung, wenn die Versorgung "weich" ist u. s. w., in der Regel wiedergefunden werden.

Aus Sicherheitsgründen wird gefordert, dass von durch eine Antriebsvorrichtung bewegten Abschlüssen oder Abschlusseinrichtungen keine gravierenden Gefahren für eventuell sich im Bewegungsraum des Abschlusses befindliche Menschen, Tieren oder Sachen ausgehen sollen oder dürfen. Solche Gefahren können insbesondere durch überschüssige, d. h. mehr als zur reinen Bewegung des Tores, Fensters, der Tür oder dergleichen Abschlusseinrichtung erforderlichen Kräfte der Antriebsvorrichtung entstehen.

Da aber der Antrieb mindestens auf die maximal benötigte Kraft ausgelegt sein muss, um die Abschlusseinrichtung überhaupt bewegen zu können, entstehen notwendigerweise Kraftüberschüsse an Stellen, wo die Abschlusseinrichtung mit geringerer Kraft bewegt werden kann.

Es sind bereits verschiedene Verfahren und Steuerungen zur Minimierung dieser Kraftüberschüsse vorgeschlagen worden. Dazu gibt es zum einen die wegabhängigen Verfahren, bei denen bei einer Lemfahrt die vom Weg oder der Bewegungszeit abhängige, zur Kraft proportionalen Größe als Funktion des Weges oder der Zeit aufgenommen wird und anhand dieser Funktion für jede Wegstrecke oder Zeiteinheit ein von dem Weg und/oder der Zeit abhängiger Schwellenwert festgelegt wird, bei dessen Überschreitung eine Abschaltung bzw. Reversierung erfolgt. Ein solches Steuerungsverfahren ist beispielsweise aus der EP 0 083 947 B1, der DE 35 32 078 A1 oder der DE 42 14 998 A1 bekannt, wobei aber eine relativ aufwendige und schnelle Steuerungsvorrichtung erforderlich ist.

Dabei betrifft die DE 35 32 078 A1 ein Verfahren und eine Steuerungsvorrichtung zur Vermeidung des Einfangens fremden Materials in einem Servofenster durch Suspendierung der Rotation oder durch Steuerung der Rotation des Motorsteuersystems in umgekehrter Richtung. Der Referenzwert zur Erkennung einer Überlastung wird in Übereinstimmung mit einer tatsächlichen Belastung des Motors in einem vorbestimmten Zeitintervall ΔT erneuert, gemäß der DE 35 32 078 A1 wird jedoch, wenn ein Beginn eines Anwachsens der Belastung festgestellt wird, das Zählen von ΔT von einem solchen Zeitpunkt aus erneut aufgenommen, und dadurch soll eine Überlastung stets innerhalb kürzester Zeit festgestellt werden.

Die Erfindung bezieht sich nicht auf solche wegabhängigen Steuerungsverfahren, sondern wendet sich der Optimierung wegunabhängiger Abschaltkriterien für Antriebsvorrichtungen zu, die zusätzlich zu solchen wegabhängigen Verfahren oder aber bevorzugt alternativ dazu einsetzbar sind. Solche wegunabhängigen Abschaltkriterien erzielen auch dann noch eine sichere Abschattung, wenn aus irgendeinem Grund die Weg/Zeit-Kraft-Zuordnung nicht funktionieren sollte, und stellen keine so hohen Anforderungen an die Ausbildung der Steuerungsvorrichtung, weswegen sie kostengünstig zu realisieren sind.

Beispiele für solche wegunabhängigen Abschaltkriterien finden sich in der GB 2 010 957 A, der DE 27 27 518 A1 oder der GB 2 169 105A, bei letzterer aber in Kombination mit einem wegabhängigen Abschaltkriterium. Die Erfindung hat sich ausgehend von den bekannten Verfahren und Steuerungen insbesondere zur Aufgabe gestellt, ein Verfahren bzw. eine Steuerung der eingangs genannten Art derart zu optimieren, dass Kraftüberschüsse in einfacher Weise minimiert werden und eine zuverlässige Abschaltung bei einer Störung der Antriebsvorrichtung erfolgt, wobei aber ein Einlemen oder Anpassen von Abschaltkriterien an am Einsatzort vorherrschende Bedingungen einfacher und schneller erfolgen soll.

Diese Aufgabe wird ausgehend von dem Verfahren erfindungsgemäß dadurch gelöst, dass der Schritt Festlegen des Schwellwerts Ermitteln eines lokalen Extremwerts des wenigstens einen Betriebsparameters durch Erfassen eines auf einen Abstieg folgenden Anstiegs oder eines auf einen Anstieg folgenden Abstiegs des Betriebsparameters umfasst.

Es ist zwar vom Prinzip her aus der eingangs erwähnten DE 196 28 2382 C2 bekannt, den bei einem Messdurchgang erfassten jeweils höchsten bzw. niedrigsten Wert eines zur Kraft proportionalen bzw. umgekehrt proportionalen Betriebsparameters festzustellen, um daraus einen Schwellwert zu ermitteln. Absolut gesehen treten aber Kraftspitzen bei nahezu allen an einen Anschlag fahrenden Antriebsvorrichtungen am Beginn und Ende der jeweiligen Fahrten auf, wobei diese Kraftspitzen meist deutlich höher ausfallen, als die zwischen den Endlagen auftretenden Extremwerte. Es sind daher bisher stets große Anstrengungen und Vorsorgemaßnahmen getroffen worden, damit die Situation an den Endstellungen nicht berücksichtigt wird. Insbesondere musste bisher immerzunächst in einer ersten Lemfahrt die jeweilige Endlage detektiert werden, um dann die Ereignisse nahe der Endlage bei einer weiteren Lemfahrt oder darauffolgenden Fahrten zur Schwellwertbildung oder Schwellwertanpassung anschließen zu können.

Erfindungsgemäß ist das Problem des Ausschließens von Werten nahe der Endlage verblüffend einfach dadurch gelöst, dass nicht der absolut gesehene Extremwert auf der gesamten Lemfahrt zur Bestimmung des Schwellwerts hergenommen wird, sondern nur ein lokaler Extremwert. Das Vorliegen eines lokalen Extremwertes wird dadurch festgestellt, dass auf den Extremwert ein Wiederanstieg bei Minima bzw. Wiederabstieg bei Maxima festgestellt wird. Am Endanschlag, wo zwar absolut gesehen ohne weiteres der höchste bzw. niedrigste Wert des zu überwachenden Betriebsparameters beobachtet werden kann, wird ein solcher Höchstwert nicht berücksichtigt, da ja nach diesem Wert kein Wiederabfallen bzw. Wiederansteigen erfolgt.

Gemäß einem weiteren Aspekt der Erfindung wird die gestellte Aufgabe bei einem Verfahren zum Steuern einer an einer Tor, eine Tür, ein Fenster oder eine sonstige zwischen einer Öffnungs- oder Schließstellung bewegliche Abschlusseinrichtung eines Gebäudes oder einer Einfriedung zum Antreiben derselben angeschlossenen Antriebsvorrichtung gelöst durch die Schritte:
- Zählen von ansteigenden bzw. abfallenden Flanken oder von lokalen Extremwerten wenigstens eines von der zum Öffnen oder Schließen der Abschlusseinrichtung benötigten Antriebskraft abhängigen, insbesondere zu dieser Antriebskraft zumindest bereichsweise direkt oder umgekehrt proportionalen, Betriebsparameters der Antriebsvorrichtung, wie vorzugsweise des Motorstromes, der Motordrehzahl und/oder der Motorversorgungsspannung eines Antriebsmotors der Antriebsvorrichtung, während des Betriebs der Antriebsvorrichtung und
- Abschalten oder Reversieren der Antriebsvorrichtung, wenn bei dem Zählen der Flanken oder lokalen Extremwerte während des Betriebs ein Übersteigen eines eine Soll-Anzahl der ansteigenden oder abfallenden Flanken oder der lokalen Extremwerte angebenden Referenzwertes festgestellt wird.

Dieses erfindungsgemäße Verfahren des Zählens ansteigender bzw. abfallender Flanken muss zwar in den Strecken- oder Wegbereichen, in denen ohnehin bereits im Normalbetrieb eine ansteigende Kraft erfolgt, keine nennenswerten Vorteile bringen. Kritisch bei solchen beweglichen Abschlüssen ist aber nahezu immer das letzte Stück kurz vor einem vollständigen Schließen des Abschlusses, wo sich z. B. bei vielen Garagentoren stets eine abfallende Kraft einstellt. Wird nun dort, wo normalerweise keine ansteigende Kraft mehr zu erwarten wäre, nochmals eine über die bereits festgestellte normale Maximalanzahl von ansteigenden bzw. abfallenden Flanken des Betriebsparameters hinaus eine weitere ansteigende bzw. abfallende, ein Ansteigen der Kraft anzeigende Flanke detektiert, kann irgendetwas nicht stimmen, weswegen eine Abschaltung oder Reversierung erfolgt. Das gleiche wäre der Fall, wenn nochmals ein lokaler Extremwert auftreten sollte, bereits die gemäß dem Referenzwert zu erwartende Anzahl von lokalen Extremwerten gezählt worden ist.

Dieses Verfahrens des Zählens abfallender oder ansteigender Flanken oder von Extremwerten ist zwar für sich allein gesehen bereits interessant, von besonderer Bedeutung ist dieses Verfahren aber in Kombination von Verfahren mit einem bei einer Lemfahrt festgelegten statischen Schwellwert, da gerade im Bereich einer abfallenden Kraft ein größerer bei Störanfällen zu überwindender Abstand von solchen statischen Schwellenwerten zu verzeichnen ist. Aus diesem Grund ist eine Kombination beider erfindungsgemäßer Verfahren und Steuerungen am meisten bevorzugt.

Die der Erfindung zugrundeliegende Aufgabe wird weiter bei einer Steuerung der eingangs genannten Art dadurch gelöst, dass die Schwellwertbestimmungseinrichtung eine Lokal-Extremwert-Ermittlungseinrichtung zum Ermitteln eines lokalen Extremwertes des wenigstens einen Betriebsparameters mit einer Zwischenspeichereinrichtung zum Zwischenspeichern eines während einer Öffnungs- oder Schließfahrt der Antriebsvorrichtung, insbesondere während der Lemfahrt, jeweils erfassten höchsten und/oder niedrigsten Wertes des wenigstens einen Betriebsparameters und einer Anstiegs- oder Abstiegserkennungseinrichtung zum Erkennen, wenn im Laufe der Öffnungs-oder Schließfahrt auf den zwischengespeicherten höchsten Wert ein Abstieg des Betriebsparameters bzw. auf den zwischengespeicherten niedrigsten Wert ein Anstieg des Betriebsparameters erfolgt, und eine Extremwert- oder Schwellwertspeichereinrichtung zum Abspeichern des festgestellten lokalen Extremwertes und/oder eines um einen Abschlagswert erniedrigten lokalen Minimums oder eines um einen Aufschlagwert erhöhten lokalen Maximums als Schwellwert, welche Extremwert- oder Schwellwertspeichereinrichtung mit der Lokal-Extremwert-Ermittlungseinrichtung zum Liefern des zwischengespeicherten höchsten Wertes bei dem Erkennen des Abstiegs durch die Anstiegs- oder Abstiegserkennungseinrichtung als lokales Maximum und/oder zum Liefern des zwischengespeicherten niedrigsten Werts bei dem Erkennen des Anstiegs durch die Anstiegs- oder Abstiegserkennungseinrichtung als lokales Minimum verbunden ist,

Vorteilhafte Ausgestaltungen der Erfindung sind Gegenstand der Unteransprüche.

Bevorzugte Betriebsparameter zum Überwachen des Kraftbedarfes einer Antriebseinrichtung sind die Leistungsaufnahme eines Antriebsmotors der Antriebseinrichtung, die Stromaufnahme - in dem Fall, in dem als Antriebsmotor ein Gleichstrommotor verwendet wird -, die Drehzahl eines Antriebsmotors und die Versorgungsspannung bei einer "weichen" Versorgung eines Antriebsmotors.

Bei einem Antriebsmotor ist die Leistungsaufnahme (mit Ausnahme von Anlaufeffekten) nämlich im allgemeinen gut zu dem Drehmoment und damit zu der das Tor/Fenster bzw. die Tür oder dergleichen Abschlusseinrichtung antreibenden Kraft proportional.

In bevorzugter Ausgestaltung der Erfindung wird dann während einer sog. Lemfahrt - d. h. einer ersten Messfahrt oder einem Messdurchgang - nach dem Einbau des Antriebes oder zum Beispiel nach einem Stromausfall oder sonstigen Störungen - die absolute Leistungsaufnahme permanent gemessen und derer größter Wert (außer bei der Anlaufphase) zwischengespeichert. Sinkt die Leistungsaufnahme wieder, so wird der zwischengespeicherte größte Wert (außer bei der Anlaufphase) als lokales Maximum gemerkt.

Diese Methode hat den Vorteil, dass eine nur ansteigende Leistungsaufnahme, wie sie z. B. bei Fahrtende beim Erreichen eines mechanischen Anschlages auftritt, nicht in die Bildung des lokalen Maximums eingeht, selbst wenn dort die auftretenden Leistungen absolut gesehen größer sind als die vorher zwischengespeicherten. Aus diesem Grund kann diese Methode auch dann angewandt werden, wenn der zurückzulegende Weg vor der Lernfahrt unbekannt ist. Daher braucht zum Feststellen sowohl des zurückzulegenden Weges als auch des Schwellwertes nur eine einzige Lemfahrt durchgeführt werden.

Am Ende der Lernfahrt wird das gemerkte lokale Maximum dann spannungsausfallsicher gespeichert, um als ein Abschaltkriterium, das als LMA-Leistung-Abschaltkriterium (Lokales Maximum Absolut) bezeichnet werden kann, für folgende Fahrten zu dienen.

Überschreitet bei einer der auf die Lernfahrt folgenden Fahrten die aktuelle Leistungsaufnahme das lokale Maximum um einen Wert - der als Aufschlagswert für den störungsfreien Normalbetrieb zu verstehen ist und prozentual zum lokalen Maximum und/oder konstant angelegt sein kann - kann man davon ausgehen, dass dieser erhöhte Kraftbedarf nicht durch die Bewegung der Abschlusseinrichtung, sondern durch ein Hindernis bei der Fahrt der Abschlusseinrichtung hervorgerufen wurde, das zum Beispiel ein eingeklemmter Mensch sein könnte.

In diesem Fall muss und kann seitens der Antriebsvorrichtung bzw. deren Steuerung reagiert werden, indem zum Beispiel die Bewegung der Abschlusseinrichtung angehalten oder auch in Gegenrichtung gefahren (reversiert) wird, um das Hindernis wieder freizugeben.

Endet die Fahrt dahin gegen ohne Hindernis, so wird bei einer weiteren vorteilhaften Ausgestaltung der Erfindung ein dabei wie bei der oben aufgeführten Lernfahrt gebildetes lokales Maximum mit dem bei der Lemfahrt erhaltenen lokalen Maximum (nach einer Plausibilitätsprüfung) verrechnet werden und bei darauf folgenden Fahrten wieder ebenso, um dieses Überwachungskriterium "LMA-Leistung" Spannungsausfall sicher nachzuführen. Dies ist sehr vorteilhaft, da z. B. durch Witterungs - und/oder Alterungseinflüsse der Kraftbedarf zum Bewegen des Abschlusses langsam zu - aber auch wieder abnehmen kann. Zur Verrechnung könnte beispielsweise ein gleich oder ungleich gewichteter Mittelwert zwischen dem zuvor gültigen und dem bei der letzten Fahrt ermittelten Extremwert gebildet werden.

In analoger Weise zu dem Abschaltkriterium "LMA-Leistung" kann anhand der Stromaufnahme eines Gleichstrommotors ein Abschaltkriterium "LMA-Strom" verwendet werden. Bei einem Gleichstrom-Motor ist die Stromaufnahme (mit Ausnahme von Anlaufeffekten) nämlich im allgemeinen sehr gut in dessen Drehmoment und damit der die Abschlusseinrichtung antreibenden Kraft proportional.

Dagegen sinkt die Drehzahl eines Antriebsmotors im allgemeinen, wenn diesem mehr Drehmoment und damit Kraft abverlangt wird und nicht nachgeregelt wird, so dass man davon ausgehen kann, dass (mit Ausnahme von Anlaufeffekten) die Drehzahl der die Abschlusseinrichtung antreibenden Kraft ausreichend umgekehrt proportional ist. Anstelle einer proportionalen Abhängigkeit könnte hier aber ohne weiteres auch ein quadratische oder sonstige funktionelle Abhängigkeit gegeben sein, es sollte aber innerhalb der zur Überwachung verwendeten Betriebsbereich gegeben sein, dass ein Absinken der Drehzahl ein Ansteigen der Kraft anzeigen kann.

Zum Bilden eines Abschaltkriteriums "LMA-Drehzahl" (Lokales Minimum Absolut) wird während der Lemfahrt die absolute Drehzahl permanent gemessen und deren kleinster Wert (außer bei der Anlaufphase) zwischengespeichert. Steigt die Drehzahl wieder, so wird der zwischengespeicherte kleinste Wert (außer bei der Anlaufphase) als lokales Minimum gemerkt.

Diese Methode hat, ähnlich wie bei den zuvor geschilderten Methoden der Verwendung von Strom und Leistung den Vorteil, dass eine nur fallende Drehzahl, wie sie z. B. bei Fahrtende beim Erreichen eines mechanischen Anschlages auftritt, nicht in die Bildung des lokalen Minimums eingeht, selbst wenn die dort auftretenden Drehzahlen kleiner sind als die zuvor zwischengespeicherten. Aus diesem Grund kann diese Methode auch dann angewendet werden, wenn der zurückzulegende Weg vor der Lernfahrt unbekannt ist.

Am Ende der Lemfahrt wird das gemerkte lokale Minimum spannungsausfallsicher gespeichert, um als "LMA-Drehzahl"-Abschaltkriterium für folgende Fahrten zu dienen.

Unterschreitet bei einer der darauf folgenden Fahrten die aktuelle Drehzahl das lokale Minimum um einen Wert (der als Abschlag für den störungsfreien Normalbetrieb zu verstehen ist und prozentual zum lokalen Minimum und/oder konstant angelegt sein kann), kann man davon ausgehen, dass dieser erhöhte Kraftbedarf nicht durch die Bewegung der Abschlusseinrichtung, sondern durch ein Hindernis bei der Fahrt der Abschlusseinrichtung hervorgerufen wurde, das zum Beispiel ein eingeklemmter Mensch sein könnte.

In diesem Fall muss und kann seitens des Antriebes reagiert werden, indem zum Beispiel die Bewegung der Abschlusseinrichtung angehalten oder auch in Gegenrichtung gefahren (reversiert) wird, um das Hindernis wieder freizugeben.

Endet die Fahrt dahingegen ohne Hindernis, so kann ein dabei wie bei der oben aufgeführten Lernfahrt gebildetes lokales Minimum mit dem bei der Lemfahrt erhaltenem (nach einer Plausibilitätsprüfung) verrechnet werden und bei darauf folgenden Fahrten wieder ebenso, um dieses Überwachungskriterium "LMA-Drehzahl" spannungsausfallsicher nachzuführen.

Dieses ist sehr sinnvoll und vorteilhaft, da zum Beispiel durch Witterungs- und/oder Alterungseinflüsse der Kraftbedarf zum Bewegen des Tores/Fensters bzw. der Tür langsam zu- aber auch wieder abnehmen kann.

In ganz analoger Weise zu dem Abschaltkriterium "LMA-Drehzahl" erfolgt die Ermittlung eines absoluten lokalen Minimums einer Versorgungsspannung eines Antriebsmotors, um so ein Abschaltkriterium "LMA-Spannung" zu erhalten. Bei einer "weichen" Versorgung eines Antriebsmotors sinkt nämlich durch den Innenwiderstand des Netzteils bedingt dessen Versorgungsspannung ab, wenn ihm mehr Drehmoment und damit mehr Kraft abverlangt wird und nicht nachgeregelt wird, so dass man davon ausgehen kann, dass (mit Ausnahme von Anlaufeffekten) die Versorgungsspannung des Motors der die Abschlusseinrichtung antreibenden Kraft für das Verfahren ausreichend umgekehrt proportional ist.

Weitere Verfahren, aus absoluten lokalen Extremwerten Überwachungskriterien zu lernen und nachzuführen, ergeben sich sinngemäß aus allen zur Verfügung stehenden Größen oder Betriebsparametern, die ausreichend proportional oder umgekehrt proportional oder sonstwie als monoton ansteigende oder abfallende Funktion des Kraftbedarfes ausgebildet sind, wobei alle Methoden miteinander kombiniert werden können - also alle Betriebsparameter jeweils gleichzeitig mit jeweiligen Schwellenwerten überwacht werden können, um eine große Überwachungssicherheit zu erhalten.

Zusätzlich wäre es auch denkbar, anhand von Änderungen dieser Betriebsparameter Kraftänderungen der die Abschlusseinrichtung antreibenden Antriebskraft festzustellen und ebenfalls als Abschaltkriterien eingesetzt werden können. Anhand von Änderungen der Betriebsparameter können aber fahrtuntypische bzw. hindemistypische Änderungen im allgemeinen erst erkannt werden, wenn der zurückzulegende Weg bekannt ist, da fahrtuntypische Änderungen in der Nähe der Endlagen, die z. B. durch Stoppen der Fahrt oder durch Endanschlag hervorgerufen sind, nicht in die Ermittlungen einbezogen werden dürfen, um die Erkennungsfähigkeit von hindemistypischen Änderungen nicht zu beeinträchtigen. Zum Erhalt dieser Abschaltkriterien anhand von Änderungen wird zum Beispiel während einer sogenannten Lemfahrt die Leistungsaufnahmeänderung (oder die Änderung der anderen Betriebsparameter) genügend oft und zeitlich und/oder steckenmäßig äquidistant gemessen und immer deren größter Wert (außer bei der Anlauf- und bei der Stopphase) gespeichert. Da somit vorher zum Ermitteln der Stopplage eine zusätzliche Lernfahrt durchzuführen ist, sind solche Methoden der Ermittlung von differentiellen absoluten Extremwerten anhand von Änderungen der Betriebsparameter weniger bevorzugt.

Zum Erkennen von fahrtuntypischen Kraftanstiegen bzw. zum Ermitteln von Kriterien zum Abschalten und/oder zum Einleiten einer sogenannten Reversierfahrt eignen sich dahingegen aber folgende Methoden in besonders vorteilhafter Weise, denen alle das gemeinsame Prinzip, nämlich Zählen ansteigender bzw. abfallender Flanken, im folgenden "CRF" für (count raising/falling edges) zugrunde liegt.

Beispielsweise werden während der Lernfahrt die Abschnitte steigender Leistungsaufnahme gezählt und spannungsausfallsicher gespeichert, um als "GRF-Leistung"-Abschaltkriterium für folgende Fahrten zu dienen.

Überschreitet bei einer der darauf folgenden Fahrten die aktuell gezählte Anzahl von Abschnitten mit steigender Leistungsaufnahme die gelernte Anzahl, kann davon ausgegangen werden, dass dieser Kraftanstieg nicht durch die Bewegung der Abschlusseinrichtung, sondern durch ein Hindernis hervorgerufen wurde, weswegen dann eine Abschaltung oder Reversierung der Antriebsvorrichtung erfolgt.

Ganz analog kann man auch die Anzahl von Abschnitten mit steigender Stromaufnahme als "CRF-Strom"-Abschaltkriterium verwenden. Zusätzlich könnte z. B. auch eine Anzahl von zwischen an- und absteigenden Flanken liegenden lokalen Extremwerten herangezogen werden.

Wird die Drehzahl des Antriebsmotors als Betriebsparameter herangezogen, werden bei der Lernfahrt die Abschnitte mit sinkender Drehzahl gezählt und spannungsausfallsicher gespeichert, umals"CRF-Drehzahl"-Abschaltkriterium für folgende Fahrten zu dienen.

Ein Überschreiten der aktuell gezählten Anzahl von Abschnitten mit absinkender Drehzahl über die gelernte Anzahl zeigt dann ein Hindernis bei der Fahrt der Abschlusseinrichtung an. Ganz analog kann unter Verwendung des Betriebsparameters "Versorgungsspannung" ein "CRF-Spannung"-Abschaltkriterium ermittelt werden.

Weitere Methoden, aus dem Zählen von Abschnitten mit steigender Kraft Überwachungskriterien zu lernen und nachzuführen, ergeben sich sinngemäß aus allen zur Verfügung stehenden Größen oder Betriebsparametern, die ausreichend proportional oder umgekehrt proportional zum Kraftbedarf sind oder eine sonstige in interessierenden Bereichen monoton ansteigende bzw. absteigende Funktion dieses Kraftbedarfes der Abschlusseinrichtung sind, wobei alle bisher erläuterten Methoden miteinander beliebig kombiniert werden können.

Ein konkretes Ausführungsbeispiel der Erfindung wird im folgenden anhand der beigefügten Figuren näher erläutert. Darin zeigt
- Fig. 1: ein mit einem Torantrieb versehenes, über Kopf bewegbares Garagentor bei einer normalen Fahrt zwischen einer Öffnungs- und einer Schließstellung oder umgekehrt;
- Fig. 2: ein Diagramm, das den beispielhaften Kraftbedarf eines Garagentores bei einer während einer ersten Lernfahrt durchzuführenden Öffnungsbewegung darstellt;
- Fig. 3: ein Diagramm vergleichbar Fig. 2, jedoch für eine im Laufe einer Lemfahrt oder im normalen Betrieb durchzuführenden Schließfahrt eines beispielhaften Garagentores;
- Fig. 4: das Garagentor gemäß Fig. 1 mit einem Hindernis im mittleren Bereich des Torblattverlaufes;
- Fig. 5: ein Diagramm vergleichbar demjenigen von Fig. 3 für die in Fig. 4 gezeigte Situation;
- Fig. 6: das Garagentor gemäß Fig. 1 mit einem Hindernis im unteren Torblattverlauf;
- Fig. 7: ein Diagramm vergleichbar demjenigen von Fig. 5 für die in Fig. 6 gezeigte Situation; und
- Fig. 8: ein Blockschaltbild für ein Ausführungsbeispiel einer Steuerung für den in Fig. 1 dargestellten Garagentorantrieb.

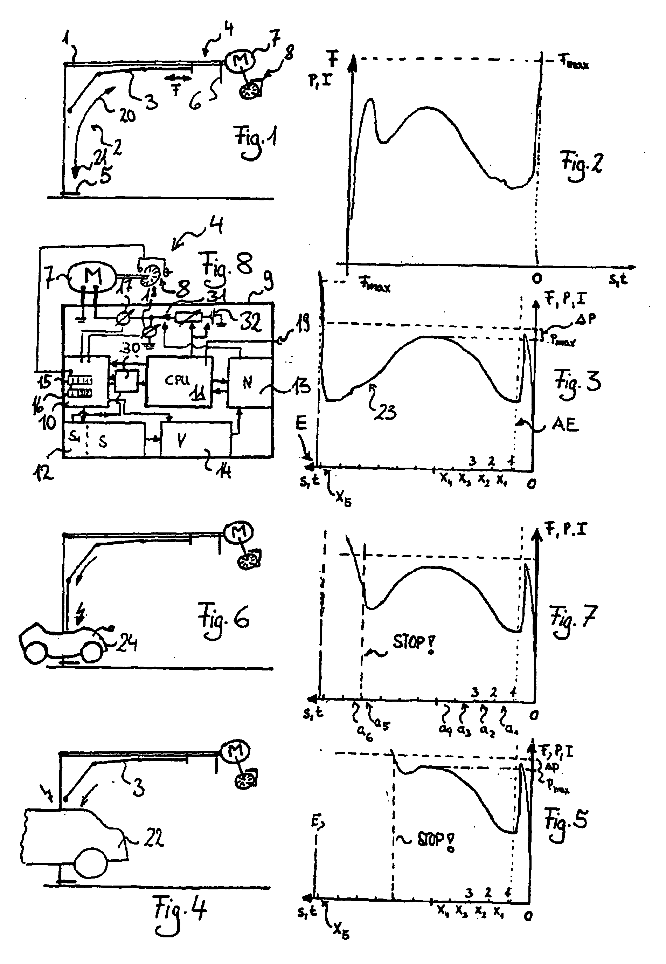

Das in Fig. 1 gezeigte Garagentor weist als Abschlusseinrichtung für ein Gebäude - Garage 1 - ein Garagentor 2 mit einem über Kopf bewegbaren Torblatt - hier Sektionaltorblatt 3 - auf. Das Garagentor 2 oder genauer dessen Sektionaltorblatt 3 ist über eine Antriebsvorrichtung in Form eines Garagentorantriebes 4 zwischen einer Öffnungsstellung und einer Schließstellung beweglich. In der Schließstellung schlägt das Sektionaltorblatt 3 an einem Schließ-Endanschlag 5 an. In der Öffnungsstellung schlägt das Sektionaltorblatt 3 an einem Öffnungs-Endanschlag 6 an. Der Garagentorantrieb 4 weist - wie dies hinreichend bekannt ist - einen elektrischen Antriebsmotor 7 auf, der mit einer Einrichtung zum Feststellen des zurückgelegten Weges, hier einem Inkrementalgeber 8 versehen ist.

Der Antriebsmotor 7 wird durch eine Steuerung 9 gesteuert, welche schematisch in Fig. 8 dargestellt ist. Die Steuerung 9 umfasst eine Überwachungseinrichtung 10, einen Mikroprozessor 11, eine spannungsausfallsichere Speichereinrichtung 12, eine Notabschalteinrichtung 13, eine Vergleichseinrichtung 14 und eine Schwellwertbestimmungseinrichtung 30.

Die Überwachungseinrichtung 10 weist eine mit dem Inkrementalgeber 8 verbundene erste Zähleinrichtung 15, die zum Feststellen des jeweils zurückgelegten Weges dient, und eine zweite, zum Zählen von Abschnitten, in denen sich absteigende oder absinkende Flanken von zu überwachenden Betriebsparametern feststellen lassen, ausgebildete Zähleinrichtung 16 auf. Die Überwachungseinrichtung 10 umfasst weiter eine nicht explizit dargestellte Uhr, um mit Hilfe des Inkrementalgebers die Drehgeschwindigkeit des Motors 7 zu überwachen, einen Stromsensor 17 zum Überwachen des Motorstromes I und einen Spannungssensor 18 zum Überwachen der Motorspannung auf.

Der Mikroprozessor 11 steuert je nach auf einer Signalleitung 19 erhaltenem Eingabebefehl die einzelnen Einheiten 7, 10, 12, 13, 14, 30 des Garagentorantriebes 4.

Die Speichereinrichtung 12 weist einen Zwischenspeicher S₁ zum Zwischenspeichern von durch die Überwachungseinrichtung 10 erhaltenen Betriebsparameterwerten und einen spannungsausfallsicheren Speicher S-z. B. EPROM-zum Speichern von Schwellwerten, Referenzwerten und/oder von zum Bilden von Schwellwerten oder Referenzwerten heranzuziehenden, bei hindemisfreien Fahrten durch die Überwachungseinrichtung 10 erhaltenen oder nachgebesserten Betriebsparameter-Sollwerten auf.

Die Vergleichseinrichtung 14 ist zum Vergleichen von im Speicher S der Speichereinrichtung 12 abgelegten Schwell-, Referenz- oder Sollwerten mit von der Überwachungseinrichtung 10 aktuell erhaltenen Betriebsparameterwerten und zum Abgeben eines Abschaltsignals an die Notabschalteinrichtung 13, falls der Vergleich einen unzulässigen Betriebszustand, insbesondere ein unzulässiges Ansteigen der Kraft F, ergeben sollte, ausgebildet.

Die Notabschalteinrichtung 13 ist zum Abschalten des Motors 7 über einen Schalter 31 oder zum Reversieren desselben über den Mikroprozessor 11 und eine Spannungsquelle 32 auf das Abschaltsignal hin ausgebildet.

Die Sollwertbestimmungseinrichtung 30 umfasst in nicht explizit dargestellter Weise eine Lokal-Extremwert-Bestimmungseinrichtung mit einer Anstiegs-/Abstiegs-Erkennungseinrichtung, welch letztere ansteigende oder abfallende Flanken der jeweiligen Betriebsparameter durch Vergleich von aufeinanderfolgenden Werten des Betriebsparameters erkennt.

Die einzelnen Einrichtungen 10, 13, 14, 30 sind als im Mikroprozessor 11 verarbeitbare Softwareprogramme realisiert.

Die Betriebsweise des Garagentorantriebes wird im folgenden anhand der Figuren 1 bis 7 näher erläutert.

Für eine erste Inbetriebnahme des Garagentorantriebes 4 nach der Montage oder zum Beispiel nach einer Störung wird zunächst eine Lernfahrt durchgeführt. Hierzu wird zunächst gemäß dem Pfeil 20 in Fig. 1 eine Öffnungsfahrt durchgeführt, die dabei auftretenden Betriebsparameter werden durch die Überwachungseinrichtung 10 überwacht. Dabei lässt sich durch Überwachung von der aus den Sensoren 17 und 18 ableitbaren Motorleistung P, des Motorstromes I oder eines sonstigen mit der zum Antreiben des Sektionaltorblattes 3 benötigten Kraft F korrelierten Betriebsparameters der Kraftverlauf feststellen, wie er beispielsweise in Fig. 2 dargestellt ist. Fig. 2 stellt ein Diagramm der Leistung P oder des Stromes I und damit der Kraft F über dem Weg s oder der Zeit t dar. Bei der Öffnungsfahrt wird das Sektionaltorblatt 3 gegen den Öffnungs-Endanschlag 6 gefahren. Dabei tritt eine sehr hohe Kraft auf, die - beispielsweise durch Überwinden eines Schwellenwerts Fₘₐₓ detektiert wird. Der Antriebsmotor 7 wird abgeschaltet und die erste Zähleinrichtung 15, die die Impulse des Inkrementalgebers 8 zählt, wird auf Null gesetzt, was durch die Null auf der Weg/Zeit-Achse angedeutet ist.

Anschließend wird die Lernfahrt durch Schließen des Garagentores 2 (Pfeil 21) fortgesetzt. Dabei wird mittels der ersten Zähleinrichtung einerseits der Weg s gezählt, d. h. die Impulse des Inkrementalgebers 8 werden gezählt. Andererseits wird eine zur Kraft F proportionale Größe - Leistung P, Strom I, oder eine zur Kraft umgekehrt proportionale Größe - die Drehzahl des Motors 7 oder die Versorgungsspannung am Spannungssensor 18 überwacht. Nach einer Anlaufphase, deren Ende A_{E} durch Zählen einer bestimmten Anzahl von Impulsen des Inkrementalgebers festgestellt wird, wird bei den direkt abhängigen Betriebsparametern P, I der jeweils höchste Wert in der Speichereinrichtung 12 zwischengespeichert. Bei den zur Kraft F invers abhängigen Größen - Drehzahl und Versorgungsspannung - wird nach der Anlaufphase der jeweils kleinste Wert durch die Überwachungseinrichtung 10 an die Speichereinrichtung 12 gegeben und dort zwischengespeichert.

Die Anstiegs- oder Abstiegserkennungseinrichtung der Schwellwertbestimmungseinrichtung erkennt, wenn im Laufe der Schließfahrt auf den im Speicher S₁ zwischengespeicherten höchsten bzw. niedrigsten Wert ein Abstieg des jeweiligen Betriebsparameters folgt. Ist dies der Fall, wird der zwischengespeicherte Wert als absoluter lokaler Extremwert spannungsausfallsicher in dem Speicher S der Speichereinrichtung 12 gespeichert. Dieser Extremwert ist in Fig. 3 als Pₘₐₓ gekennzeichnet. Wie in Fig. 3, linker Teil ersichtlich, gibt es am Ende der Schließfahrt, dann wenn das Sektionaltorblatt 3 gegen den Anschlag 5 fährt, einen Kraftanstieg, der ohne weiteres über den vorhin detektierten lokalen Extremwert Pₘₐₓ hinauslaufen kann. Da aber auf diesen Kraftanstieg kein Abstieg mehr erfolgt, wird der Absolutwert dieses durch den Endanschlag 5 hervorgerufenen Kraftanstieges nicht in dem Speicher S der Speichereinrichtung 12 gespeichert. Übersteigt aber die Kraft F den zur Detektion von Endanschlägen vorgesehenen Level Fₘₐₓ, so wird der jeweilige Zählerstand der die Impulse des Inkrementalgebers 8 zählenden ersten Zähleinrichtung 15 als Endlage E definiert. Der in Fig. 3 dargestellte absolute - nicht lokale - Extremwert am Endanschlag 5 wird also nicht gespeichert, aber zum Abschalten des Motors und zum Feststellen der Endlage E verwendet. Der Zählerstand der Zähleinrichtung 15 gibt dann also die jeweils zurückgelegte Wegstrecke des Garagentores 2 an.

Der oder die gespeicherten lokalen absoluten Extremwerte werden für ein erstes Abschaltkriterium für den Antriebsmotor 7 verwendet, wie im folgenden anhand der Figuren 4 und 5 erläutert. In Fig. 4 ist dabei verdeutlicht, wie das Sektionaltorblatt 3 auf ein Hindernis - hier ein Kraftfahrzeug 22 - auftritt. Dabei entsteht, wie aus Fig. 5 ersichtlich, ein erhöhter Kraftbedarf. Übersteigt der erhöhte Kraftbedarf den gespeicherten Extremwert Pₘₐₓ und einen zu diesem Extremwert Pₘₐₓ hinzugegebenen Aufschlagswert ΔP, erfolgt eine Abschaltung des Antriebsmotors 7. Zum Abschalten des Motors 7 ist bei der Situation von Fig. 4 nur ein geringer Kraftüberschuss notwendig, da hier der normale Kraftverlauf nahe dem Abschaltschwellenwert Pₘₐₓ + ΔP verläuft. Kritischer wäre die Situation, wenn ein Hindernis in dem in Fig. 3 mit der Bezugszahl 23 gekennzeichneten Bereich auftritt, da dort der Abstand des im Normalbetrieb zu erwartenden Kraftverlaufes von der Abschaltschwelle Pₘₐₓ + ΔP weiter entfernt ist, so dass ein erhöhter Kraftbedarf notwendig ist. Diese Situation ist in Fig. 6 näher erläutert, wo das Sektionaltorblatt 3 auf ein tieferes Hindernis, beispielsweise einen Kinderwagen 24 trifft.

Hierzu ist bei der erläuterten Ausführungsform neben dem ersten Abschaltkriterium eines über lokale absolute Extremwerte ermittelte Schwellenwerte noch ein zweites Abschaltkriterium verwirklicht.

Hierzu zählt die zweite Zähleinrichtung 16, während der in Fig. 3 angedeuteten Lernfahrt - Schließfahrt - Abschnitte x₁, x₂, x₃, x₄ und x₅, in denen die Kraft ansteigt. Hierzu werden über die Überwachungseinheit 10 und die Anstiegs/Abstiegs-Erkennungs-Einrichtung ansteigende oder absteigende Flanken der Betriebsparameterfestgestellt und jeweils äquidistante Intervalle, in denen solche Flanken auftreten, gezählt.

Tritt nun im Bereich 23, in welchem normalerweise die Kraft F nicht mehr ansteigen dürfte, im Betrieb eine Flanke ansteigender Kraft auf, wie dies in Fig. 7 gezeigt ist, so lässt sich dies über die zweite Zähleinrichtung 16 feststellen, wie dies in Fig. 7 anhand des Zählens von Abschnitten a₁, a₂, a₃, a₄, a₅ und a₆ mit ansteigenden Flanken angedeutet ist. Die Vergleichseinrichtung 14 erkennt dann, dass die aktuell durch die zweite Zähleinrichtung 16 festgestellte Anzahl von Abschnitten ansteigender/abfallender Flanken größer ist als eine bei der Lernfahrt in der Speichereinrichtung 12 als Referenzwert abgelegte Sollanzahl und gibt dies an die Notabschalteinrichtung 13 weiter, die den Motor 7 stromlos schaltet oder reversiert.

Wie aus Fig. 7 ersichtlich, ist damit eine Abschaltung weitaus früher und mit geringerem Kraftüberschuss erreichbar, wie dies über Überschreiten des Schwellenwertes Pₘₐₓ + ΔP der ebenfalls mittels der Vergleichseinrichtung 14 und Abschaltung über die Notabschalteinrichtung 13 erfolgt, zu erzielen wäre.

## Patentansprüche

1. Verfahren zum Steuern einer an ein Tor (2, 3), eine Tür, ein Fenster oder eine sonstige zwischen einer Öffnungs- und Schließstellung bewegliche Abschlusseinrichtung (2) eines Gebäudes (1) oder einer Einfriedung zum Antreiben derselben angeschlossenen Antriebsvorrichtung (4), beinhaltend.
- Festlegen eines Schwellwerts für wenigstens einen von der zum Öffnen oder Schließen der Abschlusseinrichtung (2) benötigten Antriebskraft abhängigen Betriebsparameter der Antriebsvorrichtung (4) während einer Lemfahrt in der Art, dass
a) ein Übersteigen des Betriebsparameters über den festgelegten Schwellwert hinaus oder
b) ein Absinken des Betriebsparameters unter den festgelegten Schwellwert ein unzulässiges Ansteigen der Antriebskraft anzeigt,
- Überwachen des wenigstens einen Betriebsparameters während des Betriebs der Antriebsvorrichtung (4), und
- Abschalten oder Reversieren der Antriebsvorrichtung (4), wenn im Fall a) durch das Übersteigen des Betriebsparameters oder eines von mehreren Betriebsparametern über den jeweils festgelegten Schwellwert bzw. im Fall b) durch das Absinken des Betriebsparameters oder eines von mehreren Betriebsparametern unter den jeweils festgelegten Schwellwert ein unzulässiges Ansteigen der Antriebskraft festgestellt wird,
**dadurch gekennzeichnet,**
**dass** der Schritt Festlegen des Schwellwerts Ermitteln eines lokalen Extremwerts des wenigstens einen Betriebsparameters durch Erfassen
• im Fall a) eines auf einen Anstieg folgenden Abstieg des Betriebsparameters bzw.
• im Fall b) eines auf einen Abstieg folgenden Anstiegs des Betriebsparameters.
umfasst.

2. Verfahren nach Anspruch 1,
**dadurch gekennzeichnet,**
**dass** bei einem Betriebsparameter, dessen Anstieg ein Ansteigen der Antriebskraft anzeigt, der Schritt Festlegen des Schwellwerts umfasst:
- Ermitteln eines absoluten lokalen Maximums über Feststellen wenigstens eines an einen Anstieg folgenden Abstiegs des Betriebsparameters und Definieren des während der Öffnungs-oder Schließfahrt höchsten festgestellten zwischen einem Anund einem Abstieg liegenden Wertes als absolutes lokales Maximum und/oder
- Ermitteln des absoluten lokalen Maximums über Zwischenspeichern des während der im Laufe der Lernfahrt durchgeführten Öffnungs-oder Schließfahrt jeweils auftretenden höchsten Wertes des Betriebsparameters und Definieren des höchsten Wertes als lokales absolutes Maximum, wenn im weiteren Verlauf der Öffnungs- bzw. Schließfahrt nach diesem Wert ein Absteigen des Betriebsparameters festgestellt wird.

3. Verfahren nach Anspruch 2.
**dadurch gekennzeichnet,**
**dass** der Schwellwert als gegenüber dem ermittelten lokalen absoluten Maximum um einen Aufschlagswert erhöhter Wert festgelegt wird.

4. Verfahren nach einem der voranstehenden Ansprüche.
**dadurch gekennzeichnet,**
**dass** bei einem Betriebsparameter, dessen Abstieg ein Ansteigen der Antriebskraft anzeigt, der Schritt Festlegen des Schwellwerts umfasst:
- Ermitteln eines absoluten lokalen Minimums über Feststellen wenigstens eines an einen Abstieg folgenden Anstieges des Betriebsparameters und Definieren des während der Öffnungs- oder Schließfahrt niedrigsten festgestellten zwischen einem Ab- und einem Anstieg liegenden Wertes als absolutes lokales Minimum und/oder
- Ermitteln des absoluten lokalen Minimums über Zwischenspeichern des während der im Laufe der Lernfahrt durchgeführten Öffnungs-oder Schließfahrt jeweils auftretenden niedrigsten Wertes des Betriebsparameters und Definieren des niedrigsten Wertes als lokales absolutes Minimum, wenn im weiteren Verlauf der Öffnungs- bzw. Schließfahrt nach diesem Wert ein Ansteigen des Betriebsparameters festgestellt wird.

5. Verfahren nach Anspruch 4,
**dadurch gekennzeichnet,**
**dass** der Schwellwert als gegenüber dem ermittelten lokalen absoluten Minimum um einen Abschlagswert erniedrigter Wert festgelegt wird.

6. Verfahren nach einem der Ansprüche 3 oder 5,
**dadurch gekennzeichnet,**
**dass** für den für einen störungsfreien Normalbetrieb zum Erhalt des Schwellwertes zu dem Extremwert hinzugezogenen Auf-bzw. Abschlagswert eine Konstante oder ein Bruchteil des Extremwertes verwendet wird.

7. Verfahren nach einem der Ansprüche 1 bis 4,
**dadurch gekennzeichnet,**
**dass** zum Festlegen wenigstens eines einen unzulässigen Anstieg der Antriebskraft anzeigenden Schwellwertes während der Lernfahrt ermittelt werden:
- lokale Maxima der Leistungsaufnahme des Antriebsmotors,
- lokale Maxima der Stromaufnahme eines als Antriebsmotor (7) eingesetzten Gleichstrommotors;
- lokale Minima der Drehzahl des Antriebsmotors (7) und/oder
- lokale Minima der Versorgungsspannung einer Spannungsquelle ohne Nachregelung für den Antriebsmotor.

8. Verfahren nach einem der Ansprüche 1 bis 7,
**gekennzeichnet durch**
Ermitteln von lokalen Extremwerten des wenigstens einen Betriebsparameters während des Normalbetriebes der Antriebsvorrichtung und Verwenden von bei einer hindemisfreien Fahrt ermittelten Extremwerten zum Anpassen des Schwellwerts an die jeweils vorherrschenden Betriebsbedingungen.

9. Verfahren nach Anspruch 8,
**dadurch gekennzeichnet,**
**dass** in den Fällen, in denen eine Fahrt ohne Hindernis (24,22) endet, ein dabei wie bei der Lernfahrt ermittelter Extremwert, nach einer Plausibilitätsprüfung oderohne Plausibilitätsprüfung, mit dem zuvor gültigen oder dem bei der Lernfahrt erhaltenen Schwellwert verrechnet wird und direkt oder unter Hinzuziehen des Ab- oder Aufschlagwertes als neuer Schwellwert gespeichert wird.

10. Verfahren nach einem der Ansprüche 1 bis 9, zum Steuern einer an eine zwischen einer Öffnungs- und Schließstellung bewegliche Abschlusseinrichtung (2) eines Gebäudes (1) oder einer Einfriedung zum Antreiben derselben angeschlossenen Antriebsvorrichtung (4), mit:
- Zählen von ansteigenden bzw. abfallenden Flanken oder von lokalen Extremwerten wenigstens eines von derzum Öffnen oder Schließen der Abschlusseinrichtung (2) benötigten Antriebskraft (F) abhängigen, Betriebsparameters der Antriebsvorrichtung (4) während des Betriebs der Antriebsvorrichtung (4) und
- Abschalten oder Reversieren der Antriebsvorrichtung (4), wenn bei dem Zählen der Flanken oder lokalen Extremwerte während des Betriebs ein Übersteigen eines eine Soll-Anzahl der ansteigenden oder abfallenden Flanken oder der lokalen Extremwerte angebenden Referenzwertes festgestellt wird.

11. Verfahren nach Anspruch 10,
**dadurch gekennzeichnet,**
**dass,** zusätzlich zu der Schwellwertermittlung und Schwellwertabschaltung gemäß einem oder mehrerer der Ansprüche 1 bis 9,
- Streckenabschnitte mit steigenden Gradienten,
- Streckenabschnitte mit fallenden Gradienten,
- Streckenabschnitte mit steigenden Flanken,
- Streckenabschnitte mit fallenden Flanken,
- Zeitabschnitte mit steigenden Gradienten,
- Zeitabschnitte mit fallenden Gradienten,
- Zeitabschnitte mit steigenden Flanken oder
- Zeitabschnitte mit fallenden Flanken,
des wenigstens einen Betriebsparameters gezählt werden, wobei die Abschaltung oder Reversierung dann erfolgt, wenn die Anzahl dieser Abschnitte über den gespeicherten Referenzwert hinausgeht.

12. Verfahren nach einem der Ansprüche 10 oder 11,
**gekennzeichnet durch**
- Feststellen einer Soll-Anzahl von Abschnitten (x₁ - x₅) mit ansteigenden oder abfallenden Flanken des wenigstens einen Betriebsparameters während einer Lernfahrt und
- Speichern der Soll-Anzahl als Referenzwert.

13. Verfahren nach Anspruch 6 oder Anspruch 12,
**dadurch gekennzeichnet,**
**dass** in den Fällen, in denen eine Fahrt ohne Hindernis (24, 22) endet, eine dabei wie bei der Lemfahrt ermittelte Anzahl steigender oder fallender Flanken, nach einer Plausibilitätsprüfung oder ohne Plausibilitätsprüfung, mit dem zuvor gültigen oder dem bei der Lernfahrt erhaltenen Referenzwert verrechnet wird und als neuer Referenzwert gespeichert wird.

14. Verfahren nach einem der voranstehenden Ansprüche,
**dadurch gekennzeichnet,**
**dass** derwenigstens eine Betriebsparameter ein zu der Antriebskraft zumindest bereichsweise direkt oder umgekehrt proportionaler Betriebsparameter ist

15. Verfahren nach einem dervoranstehenden Ansprüche,
**dadurch gekennzeichnet,**
**dass** als zu überwachender Betriebsparameter die Leistungsaufnahme, der Motorstrom, die Motordrehzahl und/oder die Motorversorgungsspannung eines Antriebsmotors (7) der Antriebsvorrichtung (4) ausgewählt werden.

16. Verfahren nach einem der voranstehenden Ansprüche,
**gekennzeichnet durch**
spannungsausfallsicheres Speichern des festgestellten Schwell- bzw. Referenzwertes.

17. Steuerung einer an ein Tor (2, 3), eine Tür, ein Fenster oder eine sonstige zwischen einer Öffnungs- und Schließstellung (6, 5) beweglichen Abschlusseinrichtung (2) eines Gebäudes (1) oder einer Einfriedung zum Antreiben derselben angeschlossenen Antriebsvorrichtung (4), mit
- einer Schwellwertbestimmungseinrichtung (30) zum Festlegen eines Schwellwerts fürwenigstens einen von derzum Öffnen oder Schließen der Abschlusseinrichtung (2) benötigten Antriebskraft (F) abhängigen Betriebsparameter derAntriebsvorrichtung während einer Lemfahrt in der Art dass,
a) ein Übersteigen des Betriebsparameters über den festgelegten Schwellwert hinaus oder
b) ein Absinken des Betriebsparameters unter den festgelegten Schwellwert ein unzulässiges Ansteigen der Antriebskraft anzeigt,
- einer Überwachungseinrichtung (10) zum Überwachen des wenigstens einen Betriebsparameters während des Betriebs der Antriebsvorrichtung (4), und
- einer Notabschalteinrichtung (13) zum Abschalten oder Reversieren der Antriebsvorrichtung (4), wenn im Fall a) durch das Übersteigen des Betriebsparameters oder eines von mehreren Betriebsparametern über den jeweils festgelegten Schwellwert bzw. im Fall b) durch das Absinken des Betriebsparameters oder eines von mehreren Betriebsparametern unter den jeweils festgelegten Schwellwert ein unzulässiges Ansteigen der Antriebskraft festgestellt wird,
**dadurch gekennzeichnet,**
**dass** die Schwellwertbestimmungseinrichtung (10, 12, 14)
- eine Lokal-Extremwert-Ermittlungseinrichtung (10/S₁/30) zum Ermitteln eines lokalen Extremwertes des wenigstens einen Betriebsparameters mit
• einer Zwischenspeichereinrichtung (S₁) zum Zwischenspeichern eines während der Lernfahrt, einer Öffnungsfahrt oder einer Schließfahrt der Antriebsvorrichtung jeweils erfassten höchsten und/oder niedrigsten Wertes des wenigstens einen Betriebsparameters und
• einer Anstiegs- oder Abstiegserkennungseinrichtung zum Erkennen, wenn im Laufe der Lern-, Öffnungs- oder Schließfahrt auf einen zwischengespeicherten höchsten Wert ein Abstieg des Betriebsparameters oder auf einen zwischengespeicherten niedrigsten Wert ein Anstieg des Betriebsparameters erfolgt,
und
- eine Extremwert- oder Schwellwertspeichereinrichtung (12/S) zum Abspeichern des lokalen Extremwertes oder des durch ein um einen Abschlagswert erniedrigtes lokales Minimum oder durch ein um einen Aufschlagwert erhöhtes lokales Maximum gegebenen Schwellwerts
umfasst,
wobei die Extremwert- oder Schwellwertspeichereinrichtung (12/S) mit der Lokal-Extremwert-Ennittlungseinrichtung (10/S₁/30) verbunden ist zum Liefern des zwischengespeicherten höchsten oder niedrigsten Wertes bei dem Erkennen des darauffolgenden Abstiegs bzw. Anstiegs durch die Anstiegs- oder Abstiegserkennungseinrichtung als lokaler Extremwert.

18. Steuerung nach Anspruch 17,
**dadurch gekennzeichnet,**
**dass** die Überwachungseinrichtung (10) einen Sensor (17, 18) für die Leistungsaufnahme des Antriebsmotors, einen Sensor für die Stromaufnahme eines als Antriebsmotor (7) eingesetzten Gleichstrommotors, einen Sensor für die Drehzahl des Antriebsmotors oder einen Sensor (18) für die Versorgungsspannung (8) einer ohne Nachregelung laufenden Spannungsquelle (32) für den Antriebsmotor (7) aufweist

19. Steuerung nach einem der Ansprüche 17 oder 18, zum Steuern einer an ein Tor (2, 3), eine Tür, ein Fenster oder eine sonstige zwischen einer Öffnungs- und Schließstellung bewegliche Abschlusseinrichtung (2) eines Gebäudes (1) oder einer Einfriedung zum Antreiben derselben angeschlossenen Antriebsvorrichtung (4), mit:
- einer Zähleinrichtung (16) zum Zählen von ansteigenden bzw. abfallenden Flanken oder von lokalen Extremwerten wenigstens eines von der zum Öffnen oder Schließen der Abschlusseinrichtung (2) benötigten Antriebskraft abhängigen Betriebsparameters der Antriebsvorrichtung (4) während des Betriebs derAntriebsvorrichtung,
- einer Vergleichseinrichtung (14) zum Vergleichen der durch die Zähleinrichtung (16) festgestellten Ist-Anzahl mit einem eine Soll-Anzahl der ansteigenden oder abfallenden Flanken oder der lokalen Extremwerte angebenden Referenzwert und
- einer Notabschalteinrichtung (13) zum Abschalten oder Reversieren der Antriebsvorrichtung (4), wenn die Vergleichseinrichtung (14) während des Betriebs ein Übersteigen des Referenzwertes feststellt.

20. Steuerung nach Anspruch 19,
**dadurch gekennzeichnet,**
**dass** die Zähleinrichtung zum Zählen von ansteigenden bzw. abfallenden Flanken oder von lokalen Extremwerten des Motorstromes, der Motordrehzahl und/oder der Motorversorgungsspannung eines Antriebsmotors (7) der Antriebsvorrichtung (4) ausgebildet ist.

21. Steuerung nach einem der Ansprüche 17 bis 20,
**dadurch gekennzeichnet,**
**dass** der wenigstens eine Betriebsparameter zu
der Antriebskraft zumindest bereichsweise direkt oder umgekehrt proportional ist.

## Claims

1. Process for controlling a drive mechanism (4) connected to a gate (2, 3), a door, a window or other closure device (2) of a building (1) or an enclosure which is movable between an open and a closed position, for the purpose of driving it, comprising:
- fixing a threshold value for at least one operating parameter of the drive mechanism (4) dependent on the drive force needed to open or close the closure device (2) during a learning movement, so that
a) if the operating parameter exceeds the fixed threshold or
b) if the operating parameter fails to reach the fixed threshold an inadmissible increase in the driving force is displayed,
- monitoring the at least one operating parameter during operation of the drive mechanism (4), and
- switching off or reversing the drive mechanism (4) if an inadmissible increase in the driving force is detected, a) as a result of the operating parameter or one or a plurality of operating parameters exceeding the fixed threshold or b) as a result of the operating parameter or one of a plurality of operating parameters failing to reach the fixed threshold,
**characterised in that** the step of fixing the threshold value comprises determining a local extreme value for the minimum of one operating parameter by detecting
• in case a) decrease in the operating parameter following an increase, or
• in case b) an increase in the operating parameter following a reduction.

2. Process according to claim 1, **characterised in that** with an operating parameter the increase in which indicates an increase in the driving force, the step of fixing the threshold value comprises:
• determining an absolute local maximum by establishing at least one fall in the operating parameter following a rise and defining the maximum value between a rise and fall detected during the opening or closing as the absolute local maximum and/or
• determining the absolute local maximum by temporarily storing the highest value of the operating parameter occurring during the opening or closing movement carried out in the course of the learning movement and defining the highest value as the local absolute maximum if a fall in the operating parameter is detected as the opening or closing movement continues.

3. Process according to claim 2, **characterised in that** the threshold value is fixed as a value increased by a supplement in relation to the local absolute maximum determined.

4. Process according to one of the preceding claims, **characterised in that** in the case of an operating parameter the decrease in which indicates an increase in the driving force, the step of fixing the threshold value comprises:
• determining an absolute local minimum by establishing at least one rise in the operating parameter following a fall and defining the lowest value between a fall and a rise detected during the opening or closing movement as the absolute local minimum and/or
• determining the absolute local minimum by temporarily storing the lowest value of the operating parameter occurring during the opening or closing movement carried out in the course of the learning movement and defining the lowest value as the local absolute minimum if a rise in the operating parameter is detected as the opening or closing movement continues.

5. Process according to claim 4, **characterised in that** the threshold value is fixed as a value reduced by a reduction in relation to the local absolute minimum determined.

6. Process according to one of the claims 3 or 5, **characterised in that** a constant or a fraction of the extreme value is used for the supplement or reduction applied to the extreme value in order to obtain the threshold value for trouble-free normal operation.

7. Process according to one of the claims 1 to 4, **characterised in that** the following are determined in order to fix at least one threshold value indicating an inadmissible rise in the driving force during the learning movement:
- local maxima in the power consumption of the drive motor,
- local maxima in the current consumption of a d.c. engine used as the drive motor (7);
- local minima in the speed of the drive motor (7) and/or
- local minima in the supply voltage of a voltage source without any adjustment for the drive motor.

8. Process according to one of the claims 1 to 7, **characterised by** determining local extreme values of the at least one operating parameter during normal operation of the drive mechanism and using extreme values determined during trouble-free operation in order to adapt the threshold value to the operating conditions prevailing.

9. Process according to claim 8, **characterised in that** in cases where an operation ends without any problems (22, 24) an extreme value determined as in the learning movement after a plausibility check our without a plausibility check is compared with the threshold value valid previously or obtained during the learning movement and is stored as the new threshold value, directly or after application of the reduction or supplement.

10. Process according to one of the claims 1 to 9, for controlling a drive mechanism (4) attached to a closure device (2) for a building (1) or enclosure which is movable between an open and closed position, for the purpose of driving it, comprising:
- counting rising or falling flanks or local extreme values of at least one operating parameter of the drive mechanism (4) dependent on the drive force (F) needed to open or close the closure means (2) during the operation of the drive mechanism (4) and
- switching off or reversing the drive mechanism (4) if the counting of the flanks or local extreme values during the operation detects that a reference value indicating the desired number of rising or falling flanks or local extreme values has been exceeded.

11. Process according to claim 10, **characterised in that** in addition to determining the threshold value and switching it off according to one or more of claims 1 to 9,
- distance segments with rising gradients,
- distance segments with falling gradients,
- distance segments with rising flanks,
- distance segments with falling flanks,
- time segments with rising gradients,
- time segments with falling gradients,
- time segments with rising flanks or
- time segments with falling flanks
of the at least one operating parameter are counted, the switching off or reversing taking place if the number of these segments exceeds the reference value stored.

12. Process according to one of claims 10 or 11, **characterised by**
- determining a desired number of segments (x₁ x₅) with rising or falling flanks of the at least one operating parameter during a learning movement and
- storing the desired number as a reference value.

13. Process according to claim 6 or claim 12, **characterised in that** those cases in which a movement ends without any problems (24, 22) a number of rising or falling flanks, determined as in the learning movement, after a plausibility check or without plausibility check, is compared with the threshold value previously valid or obtained during the learning movement and is stored as the new reference value.

14. Process according to one of the preceding claims, **characterised in that** the at least one operating parameter is an operating parameter which is directly or inversely proportional to the driving force at least in parts.

15. Process according to one of the preceding claims, **characterised in that** the power consumption, the motor current, the motor speed and/or the motor supply voltage of a drive motor (7) of the drive mechanism (4) are selected as the operating parameters which are to be monitored.

16. Process according to one of the preceding claims, **characterised by** storage of the threshold or reference value which is unaffected by loss of power.

17. Control of a drive mechanism (4) connected to a gate (2, 3), a door, a window or other closure (2) of a building (1) or an enclosure which is movable between an open and closed position, for the purpose of driving it, having:
- threshold value determining means (30) for fixing a threshold value for at least one operating parameter of the drive mechanism dependent on the drive force (F) needed to open or close the closure device (2) during a learning movement, such that
a) if the operating parameter exceeds the fixed threshold or
b) if the operating parameter fails to reach the fixed threshold
- an inadmissible increase in the driving force is displayed, a monitoring device (10) for monitoring the at least one operating parameter during operation of the drive mechanism (4), and
- emergency switching means (13) for switching off the drive mechanism (4) if an inadmissible increase in the driving force is detected, a) as a result of the operating parameter or one of a plurality of operating parameters exceeding the fixed threshold or b) as a result of the operating parameter or one of a plurality of operating parameters failing to reach the fixed threshold,
**characterised in that** the threshold value determining means (10, 12, 14) comprises
- a local extreme value of the minimum of one operating parameter with
• a temporary storage device (S₁) for temporarily storing a highest and/or lowest value of the minimum of one operating parameter detected during the learning movement, an opening movement or a closing movement of the drive mechanism, and
• an increase or reduction detecting device for detecting, in the course of the learning movement, opening movement or closing movement, when there is a fall in the operating parameter in response to a temporarily stored maximum value or an increase in the operating parameter in response to a temporarily stored lowest value, and
- an extreme value or threshold storage device (12/S) for storing the local extreme value or the threshold provided by a local minimum minus a reduction or a local maximum plus a supplement,
the extreme value or threshold storage device (12/S) being connected to the local extreme value determining device (10/S₁/30) for supplying the temporarily stored highest or lowest value when the subsequent fall or rise is recognised by the rise or fall detecting device as a local extreme value.

18. Control according to claim 17, **characterised in that** the monitoring device (10) comprises a sensor (17, 18) for the power consumption of the drive motor, a sensor for the current consumption of a d.c. motor used as the drive motor (7), a sensor for detecting the speed of the drive motor or a sensor (18) for the voltage supply (8) of a voltage source (32) for the drive motor (7) operating without further adjustment.

19. Control according to one of claims 17 or 18, for controlling a drive mechanism (4) connected to a gate (2, 3), a door, a window or other closure device (2) of a building
(1) or an enclosure which is movable between an open and a closed position, for the purpose of driving it, having:
- a counter (16) for counting rising or falling flanks or local extreme values of at least one operating parameter of the drive mechanism (4) dependent on the drive force needed to open or close the closure means (2) during the operation of the drive mechanism,
- a comparator (14) for comparing the actual number detected by the counter (16) with a reference value specifying the desired number of rising or falling flanks or the local extreme value, and
- an emergency cut-off (13) for switching off or reversing the drive mechanism (4) if the comparator (14) detects that the reference value has been exceeded during operation.

20. Control according to claim 19, **characterised in that** the counter is designed to count rising or falling flanks or local extreme values of the motor current, motor speed and/or motor supply voltage of a drive motor (7) of the drive mechanism.

21. Control according to one of the claims 17 to 20, **characterised in that** the at least one operating parameter is directly or inversely proportional to the driving force at least in parts.

## Revendications

1. Procédé pour commander un dispositif d'entraînement (4) raccordé, pour son entraînement, à un portail (2, 3), une porte, une fenêtre ou un dispositif de fermeture (2) quelconque pouvant être déplacé entre une position d'ouverture et une position de fermeture, d'un bâtiment (1) ou d'une enceinte, comprenant:
- la définition d'une valeur seuil d'au moins un paramètre d'exploitation du dispositif d'entraînement (4) dépendant de la force d'entraînement nécessaire pour ouvrir ou fermer le dispositif de fermeture (2) pendant une course d'apprentissage de manière que
a) un dépassement par le paramètre d'exploitation de la valeur seul définie ou
b) une diminution du paramètre d'exploitation en dessous de la valeur seuil définie indique une augmentation à proscrire de la force d'entraînement,
- la surveillance de l'au moins un paramètre d'exploitation, pendant l'exploitation du dispositif d'entraînement (4) et
- le débranchement ou l'inversion du dispositif d'entraînement (4) lorsque dans le cas a) par le dépassement du paramètre d'exploitation ou d'un paramètre d'exploitation parmi plusieurs au-delà de la valeur seuil définie correspondante ou, dans le cas b) la diminution du paramètre d'exploitation ou d'un paramètre d'exploitation parmi plusieurs en deçà de la valeur seuil définie correspondante, une augmentation à proscrire de la force d'entraînement est déterminée,
**caractérisé en ce que**
l'étape de définition d'une valeur seuil comprend une détermination d'une valeur extrême locale de l'au moins un paramètre d'exploitation par acquisition
dans le cas a) d'une descente suivant une montée du paramètre d'exploitation ou dans le cas b) d'une montée du paramètre d'exploitation suivant une descente.

2. Procédé selon la revendication 1,
**caractérisé en ce que**
dans le cas d'un paramètre d'exploitation dont la montée indique une croissance de la force d'entraînement, l'étape définition de la valeur seuil comprend :
- la détermination d'un maximum local absolu par constatation d'au moins une descente suivant une montée dur paramètre d'exploitation et définition de la valeur la plus forte figurant entre montée et descente, constatée pendant le parcours d'ouverture ou de fermeture, en tant que maximum local absolu et/ou
- la détermination du maximum local absolu par enregistrement intermédiaire de la valeur de la plus forte du paramètre d'exploitation se présentant chaque fois pendant le parcours d'ouverture ou de fermeture exécuté au cours de la course d'apprentissage et définition de la plus forte valeur en tant que maximum local absolu lorsque, pendant la suite du déroulement du parcours d'ouverture ou de fermeture, après cette valeur, une descente du paramètre d'exploitation est constatée.

3. Procédé selon la revendication 2,
**caractérisé en ce que**
la valeur seuil est définie selon une valeur augmentée d'une majoration par rapport au maximum local absolu déterminé.

4. Procédé selon l'une quelconque des revendications précédentes,
**caractérisé en ce que**
dans le cas d'un paramètre d'exploitation dont la descente indique une croissance de la force d'entraînement, l'étape définition de la valeur seuil comprend :
- la détermination d'un minimum local absolu par constatation d'au moins une montée suivant une descente du paramètre d'exploitation et définition de la valeur la plus faible figurant entre montée et descente, constatée pendant le parcours d'ouverture ou de fermeture, en tant que minimum local absolu et/ou
- détermination du minimum local absolu par enregistrement intermédiaire de la valeur la plus faible du paramètre d'exploitation se présentant chaque fois pendant le parcours d'ouverture ou de fermeture exécuté au cours de la course d'apprentissage et définition de la plus faible valeur en tant que minimum local absolu lorsque, pendant la suite du déroulement du parcours d'ouverture ou de fermeture, après cette valeur, une montée du paramètre d'exploitation est constatée.

5. Procédé selon la revendication 4,
**caractérisé en ce que**
la valeur seuil est définie selon une valeur diminuée d'une minoration par rapport au minimum local absolu déterminé.

6. Procédé selon la revendication 3 ou 5,
**caractérisé en ce que**
une constante ou une fraction de la valeur extrême est utilisée pour la valeur de majoration ou de minoration prise en compte avec la valeur extrême pour conserver la valeur de seuil pour un fonctionnement normal sans dysfonctionnement.

7. Procédé selon l'une quelconque des revendications 1 à 4,
**caractérisé en ce que**
pour définir au-moins une valeur seuil indiquant une augmentation à proscrire de la force d'entraînement, sont déterminés pendant la course d'appretissage :
- le maximum local de l'absorption de puissance du moteur d'entraînement,
- le maximum local de la consommation de courant d'un moteur à courant continu utilisé en tant que moteur d'entraînement (7) ;
- le minimum local de la vitesse de rotation de moteur d'entraînement (7) et/ou
- le minimum local de la tension d'alimentation d'une source de tension sans post-régulation pour le moteur d'entraînement.

8. Procédé selon l'une quelconque des revendications 1 à 7,
**caractérisé par** la détermination de valeurs extrêmes locales du paramètre d'exploitation pendant le fonctionnement normal de l'au moins un dispositif d'entraînement et utilisation de valeurs extrêmes déterminées pendant un parcours sans obstacle pour adapter la valeur seuil aux conditions de fonctionnement régnant à ce moment.

9. Procédé selon la revendication 8,
**caractérisé en ce que**
dans les cas d'un parcours se terminant sans obstacle (24, 22), une valeur extrême déterminée comme lors de la course d'apprentissage, après test de plausibilité ou sans test de plausibilité, est calculée avec la valeur seuil auparavant valide obtenue par la course d'apprentissage et enregistrée directement en tant que nouvelle valeur seuil ou en prenant un compte la valeur de minoration ou majoration.

10. Procédé selon l'une quelconque des revendications 1 à 9,
pour commander un dispositif d'entraînement (4) raccordé à un dispositif de fermeture (2) quelconque pouvant être déplacé entre une position d'ouverture et une position de fermeture, d'un bâtiment (1) ou d'une enceinte, comportant :
- le comptage de fronts montants ou descendants ou de valeurs extrêmes locales d'au moins un paramètre d'exploitation du dispositif d'entraînement (4) dépendant la force d'entraînement (F) nécessaire pour ouvrir ou fermer le dispositif de fermeture (2) pendant le fonctionnement du dispositif d'entraînement (4) et
- le débranchement ou l'inversion du dispositif d'entraînement (4) lorsque, au cours du comptage des fronts ou des valeurs extrêmes pendant le fonctionnement un dépassement d'une valeur de référence indiquant un nombre de consigne de fronts montants ou descendants ou des valeurs extrêmes locales est constaté.

11. Procédé selon la revendication 10,
**caractérisé en ce qu'**
outre la détermination de la valeur de seuil et du débranchement de valeur de seuil selon une ou plusieurs de revendications 1 à 9, sont comptées les
- sections de trajet de gradient croissant,
- sections de trajet de gradient décroissant,
- sections de trajet de front montant,
- sections de trajet de front descendant,
- durées de gradient croissant,
- durées de gradient décroissant,
- durées de front montant,
- durées de front descendant,
de l'au moins un paramètre d'exploitation, le débranchement ou l'inversion se réalisant lorsque le nombre de ces sections ou durées dépasse la valeur de référence enrégistrée.

12. Procédé selon l'une quelconque des revendications 10 ou 11,
**caractérisé par**
- la détermination d'une quantité de consigne de sections (x₁ - x₅) de fronts montants ou descendants de l'au moins un paramètre d'exploitation pendant une course d'apprentissage et
- l'enregistrement de la quantité de consigne en tant que valeur de référence.

13. Procédé selon la revendication 6 ou la revendication 12,
**caractérisé en ce que**
dans les cas d'un parcours qui se termine sans obstacle (24, 22) un nombre de fronts montants ou descendants déterminé comme lors de la course d'apprentissage, après test de plausibilité ou sans test de plausibilité, est calculé avec la valeur de référence auparavant valide ou obtenue par la course d'apprentissage et enregistrée en tant que nouvelle valeur référence.

14. Procédé selon l'une quelconque des revendications précédentes,
**caractérisé en ce que**
l'au moins un paramètre d'exploitation est un paramètre d'exploitation directement proportionnel ou inversement proportionnel au-moins par zone avec la force d'entraînement.

15. Procédé selon l'une quelconque des revendications précédentes,
**caractérisé en ce que**
comme paramètres d'exploitation à surveiller, on choisit l'absorption de puissance, le courant moteur, la vitesse de rotation du moteur et/ou la tension d'alimentation du moteur d'un moteur d'entraînement (7) du dispositif d'entraînement.

16. Procédé selon l'une quelconque des revendications précédentes,
**caractérisé par**
un enregistrement avec protection contre les pannes de courant de la valeur de seuil ou de référence constatée.

17. Commande d'un dispositif d'entraînement (4) raccordé, pour son entraînement, à un portail (2, 3), une porte, une fenêtre ou un dispositif de fermeture (2) quelconque pouvant être déplacé entre une position d'ouverture et une position de fermeture (6, 5), d'un bâtiment (1) ou d'une enceinte, avec
- un dispositif de détermination de valeur seuil (30) pour définir une valeur seuil d'au moins un paramètre d'exploitation du dispositif d'entraînement dépendant de la force d'entraînement (F) nécessaire pour ouvrir ou fermer le dispositif de fermeture (2) de manière que
a) un dépassement par le paramètre d'exploitation de la valeur seuil définie ou
b) une diminution du paramètre d'exploitation en dessous de la valeur seuil définie indique une augmentation à proscrire de la force d'entraînement,
- un dispositif de surveillance (10) pour la surveillance de l'au moins un paramètre d'exploitation, pendant l'exploitation du dispositif d'entraînement et
- un dispositif de d'arrêt d'urgence (13) pour l'arrêt ou l'inversion du dispositif d'entraînement (4) lorsque, dans le cas a), par le dépassement du paramètre d'exploitation ou d'un paramètre d'exploitation parmi plusieurs au-delà de la valeur seuil définie correspondante ou, dans le cas b), par la diminution du paramètre d'exploitation ou d'un paramètre d'exploitation parmi plusieurs en deça de la valeur seuil définie correspondante une augmentation à proscrire de la force d'entraînement est déterminée,
**caractérisé en ce que**
le dispositif de détermination de valeur seuil (10, 12, 14) comprend
- un dispositif de détermination de valeur extrême locale (10/S₁/30) pour déterminer une valeur extrême locale du paramètre d'exploitation dont au-moins un existe avec
- un dispositif d'enregistrement intermédiaire (S₁) pour enregistrer de façon intermédiaire une valeur maximale et/ou minimale chaque fois acquise de l'au moins un paramètre d'exploitation pendant un parcours d'ouverture ou de fermeture du dispositif d'entraînement pendant la course d'apprentissage et
- un dispositif de reconnaissance de montée ou de descente pour reconnaître lorsque, au cours du parcours de fermeture, d'ouverture ou d'apprentissage, par rapport à la valeur maximale enregistrée de façon intermédiaire, une diminution du paramètre d'exploitation ou, par rapport à la valeur minimale enregistrée de façon intermédiaire, une augmentation du paramètre d'exploitation se produit, et
- un dispositif de enregistrement de valeur seuil ou de valeur extrême (12/S) pour enregistrer la valeur extrême locale ou un minimum local réduit d'une valeur de minoration ou un maximum local augmenté d'une valeur de majoration en tant que valeur seuil donnée,
- le dispositif d'enregistrement de valeur seuil ou de valeur extrême (12/S) est relié au dispositif de détermination de valeur extrême locale (12/S₁/30) pour fournir la valeur maximale ou minimale enregistrée de façon intermédiaire lors de la reconnaissance de la descente ou montée suivante par le dispositif de reconnaissance de descente ou de montée en tant que valeur extrême locale.

18. Commande selon la revendication 17,
**caractérisé en ce que**
le dispositif de surveillance (10) présente un capteur (17, 18) de l'absorption de puissance du moteur d'entraînement, un capteur de la consommation en courant d'un moteur à courant continu utilisé en tant que moteur d'entraînement, un capteur de la vitesse de rotation du moteur d'entraînement ou un capteur (18) pour la tension d'alimentation (8) d'une source de tension (32) fonctionnant sans post-régulation pour le moteur d'entraînement (7).

19. Commande selon l'une des revendications 17 ou 18,
pour commander un dispositif d'entraînement (4) raccordé, pour son entraînement, à un portail (2, 3), une porte, une fenêtre ou un dispositif de fermeture (2) quelconque pouvant être déplacé entre une position d'ouverture et une position de fermeture, d'un bâtiment (1) ou d'une enceinte, avec
- un dispositif de comptage (16) pour le comptage de fronts montants ou descendants ou de valeurs extrêmes locales d'un paramètre d'exploitation du dispositif d'entraînement (4) dépendant de la force d'entraînement nécessaire pour ouvrir ou fermer le dispositif de fermeture (2) pendant l'exploitation du dispositif d'entraînement,
- un dispositif de comparaison (14) pour la comparaison de la quantité réelle constatée par le dispositif de comptage (16) avec une quantité de consigne de fronts montants ou descendants ou de la valeur de référence indiquant les valeurs extrêmes locales et
- un dispositif d'arrêt d'urgence (13) pour l'arrêt ou l'inversion du dispositif d'entraînement (4) lorsque le dispositif de comparaison (14) constate pendant l'exploitation un dépassement de la valeur de référence.

20. Commande selon la revendication 19,
**caractérisée en ce que**
le dispositif de comptage est constitué pour le comptage de fronts montants ou descendants ou de valeurs extrêmes locales du courant moteur, de la vitesse de rotation du moteur et/ou de la tension d'alimentation de moteur d'un moteur d'entraînement (7) du dispositif d'entraînement (4).

21. Commande selon l'une quelconque des revendications 17 à 20,
**caractérisé en ce que**
l'au moins un paramètre d'exploitation est directement proportionnel ou inversement proportionnel au-moins par zone avec la force d'entraînement.
